# EUROPEAN PATENT SPECIFICATION

(11) **EP 2 729 876 B1**
(45) Date of publication and mention of the grant of the patent: **01.06.2016**
(21) Application number: 11874029.9
(22) Date of filing: 14.10.2011
(51) Int. Cl.: G06F 11/14, G06F 12/08, G06F 12/16

(54) **PERFORMING A REPLICATION OPERATION IN RESPONSE TO MOVEMENT OF A VIRTUAL DATA CONTAINER**
DURCHFÜHRUNG EINES WIEDERHOLBETRIEBS JE NACH DER BEWEGUNG EINES VIRTUELLEN DATENBEHÄLTERS
RÉALISATION D'UNE OPÉRATION DE REPRODUCTION EN RÉPONSE À UN DÉPLACEMENT D'UN CONTENANT DE DONNÉES VIRTUELLES

(43) Date of publication of application: 14.05.2014
(73) Proprietor: Hewlett-Packard Development Company, L.P., Houston, TX 77070 (US)
(72) Inventor: SLATER, Alastair M., Stoke Gifford Bristol BS34 8QZ (GB); SIMPSON, Benjamin L., Stoke Gifford Bristol BS34 8QZ (GB)
(74) Representative: Liesegang, Eva
(86) International application number: PCT/US2011/056327
(87) International publication number: WO 2013/055357

(56) References cited:
- US-A1- 2008 016 131
- US-A1- 2011 004 727
- US-A1- 2011 004 727
- US-A1- 2011 231 172
- US-A1- 2011 231 172
- US-B1- 6 338 006
- US-B2- 7 487 008

## Description

### Background

A typical Computer network may have a backup and recovery system for purposes of restoring data (one or multiple files, for example) on the network to a prior state should the data become corrupted, be overwritten, subject to an attack from a virus, etc. Traditionally, the backup and recovery system may include physical magnetic tape drives that store backup data on magnetic tapes. After a transfer of backup data to a given magnetic tape, the tape may be removed from its tape drive and stored in a secure location, such as in a fireproof safe. The backup and recovery system may alternatively be a virtual tape library-based system that emulates but replaces the physical magnetic tape drive system. With a virtual tape library-based system, virtual cartridges, instead of magnetic tapes, store the backup data.
Document US 2011/0231172 A1 describes a system and a method for determining impact of a backup operation on virtual storage resources by means of simulation. In particular, an actual performance, a simulated performance, a logical capacity and a physical capacity of the system are determined. Document US 2008/0016131 A1 describes a method for removing redundant data from a backup storage system by replacing a redundant data object with a pointer to an identical data object. Document US 2011/0004727 A1 describes connection and operation of a plurality of backup hosts and a plurality of virtual tape library servers. The virtual tape library servers emulate physical tape library servers for data storage.

### Brief Description of the Drawing

Fig. 1 is a schematic diagram of a computer network that employs storage appliances according to an example implementation.
Fig. 2 is an illustration of using movement of a virtual cartridge from a virtual cartridge slot to a virtual mail slot to trigger a replication operation according to an example implementation.
Fig. 3 is a flow diagram depicting a technique to perform a replication operation according to an example implementation.
Fig. 4 is a flow diagram depicting a technique to perform a replication operation in response to movement of a virtual cartridge according to an example implementation.
Fig. 5 is an illustration of using the movement of a file into a directory to trigger a replication operation according to an example implementation.

### Detailed Description

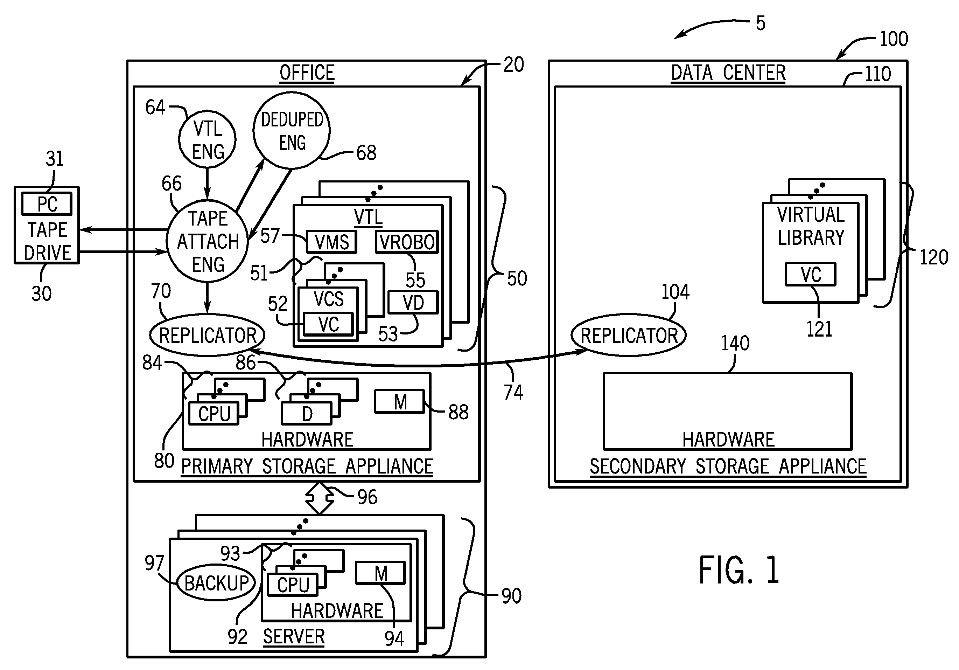

Fig. 1 depicts an example computer network 5, which includes one or multiple remote offices 10 (one remote office 10 being depicted in Fig. 1, as a non-limiting example) and a data center 100. The remote office 10 contains one or multiple servers 90 (application servers, storage servers, web servers, etc.) and a virtual tape library storage appliance (herein called the "primary storage appliance 20"), which stores backup data for the servers 90. The backup data stored on the primary storage appliance 20 may be further replicated and stored on, for example, another virtual tape library storage appliance (herein called the "secondary storage appliance 110) of the data center 100 and/or one or multiple physical tape drives, such as example physical tape drive 30.

In accordance with some implementations of the invention, which is defined in detail in the appended independent claims 1 and 9, the primary storage appliance 20, the secondary storage appliance 110 and the servers 90 are "physical machines," or actual machines that are made up of software and hardware. Although each of the primary storage appliance 20, the secondary storage appliance 110 and the server(s) 90 is depicted in Fig. 1 as being contained within a box, a particular physical machine may be a distributed machine, which has multiple nodes that provide a distributed and parallel processing system. The primary storage appliance 20 and the server(s) 90 may be located within one cabinet (or rack); or alternatively, the primary storage appliance 20 and the server(s) 90 may be located in multiple cabinets (or racks). Likewise, the secondary storage appliance 110 may be located within one cabinet (or rack); or alternatively, the secondary storage appliance 110 may be located in multiple cabinets (or racks).

In general, a given server 90 may include hardware 92, such as one or more Central Processing Units (CPUs) 93 and a memory 94 that stores machine executable instructions, application data, and so forth. In general, the memory 94 is a non-transitory memory, which may include semiconductor storage devices, magnetic storage devices, optical storage devices, and so forth.

As depicted in Fig. 1, a given server 90 may include a set of machine executable instructions that when executed by the CPU(s) 93 of the server 90 form a backup application 97 to cause backup data to be stored on/retrieved from the primary storage appliance 20 and/or second storage appliance 100 in a backup operation, as well as potentially cause backup data to be stored on/retrieved from other storage devices, such as example physical tape drive 30. Although not shown in Fig. 1, the server 90 may include other sets of machine executable instructions that when executed by the CPU(s) 93 of the server 90 form an operating system for the server 90, a graphical user interface (GUI) to control backup/restore operations with the primary storage appliance 20, device drivers, and so forth.

The server(s) 90 communicate with the primary storage appliance 20 using a communication link 96, such as one or multiple buses or other fast interconnects. In this manner, the server(s) 90 may communicate with the primary storage appliance 20 using one or multiple protocols, such as a serial attach Small Computer System Interface (SCSI) bus protocol, a parallel SCSI protocol, a Universal Serial Bus (USB) protocol, a Fibre Channel protocol, an Ethernet protocol, and so forth. Being a physical machine, the primary storage appliance 20 contains hardware 80, such as one or more CPUs 84; a non-transitory memory 88 that stores machines executable instructions, application data, and so forth; and one or multiple drives 86 (optical drives, solid state drives, magnetic storage drives, etc) that store, among other data content, the backup data for the server(s) 90. Similar to the primary storage appliance 20, the secondary storage appliance 110 contains hardware 140 that executes one or multiple sets of machine executable instructions to form an operating system, device drivers, and so forth.

The primary storage appliance 20 emulates a physical tape drive system and as such, presents a virtual tape drive system to the server(s) 90 having virtual controls that correspond to controls of the physical tape drive system. In general, the primary storage appliance 20 provides one or multiple ports (V-Ethernet, V-Fibre Channel, and so forth) for purposes of presenting virtual entities to the server(s) 90. In this manner, the primary storage appliance 20 presents one or multiple virtual tape libraries 50 (i.e., emulated physical tape libraries) for use by the server(s) 90. Although the server(s) 90 perceive the backup/restore operations as using physical tapes, the "tapes" are "virtual tapes," or "virtual cartridges," which are stored on the drives 86 of the primary storage appliance 20, instead of being stored on tape media.

More specifically, each virtual library 50 has virtual components that collectively emulate a physical tape drive interface and present virtual tape cartridge slots (called, "virtual cartridge slots 51" herein), which would be present in a physical tape system.

In this manner, each virtual cartridge slot 51 is associated with a virtual data container called a "primary virtual cartridge 52" herein. The primary storage appliance 20 assigns a unique identifier, or "barcode," to each primary virtual cartridge 52 when created, and this barcode is used to track the virtual cartridges 52 within the network 5. In addition to its virtual cartridge slots 51, a given virtual library 50 emulates a number of addressable components of a physical tape drive system, such as one or multiple virtual tape drives 53 used to effect data transfer/restoral by a host; virtual robotics 55 used to move the primary virtual cartridge slots 51; and a virtual mail slot 57, which is used to transfer the primary virtual cartridges 52 into and out of the virtual tape library 50. As described further below, the virtual mail slot 57 may also be used to trigger a replication operation.

The backup application 97 of a given server 90 backs up data by interacting with the virtual interface components of a given virtual tape library 50 to store or update a corresponding primary virtual cartridge 52 in the library 50. In a similar manner, the backup application 97 may interact with the virtual interface components to recover data from a given primary virtual cartridge 52.

For such purposes of adding an additional layer of backup security, the backup application 97 may occasionally interact with the primary storage appliance 20 to replicate a primary virtual cartridge 52. For example, the backup application 97 may communicate with the primary storage appliance 20 to cause the primary storage appliance 20 to update or create 1.) a physical cartridge on a physical tape drive (such as depicted physical cartridge 31); or 2.) a secondary virtual cartridge on the secondary storage appliance 110.

In this manner, virtual libraries 120 of the secondary storage appliance 110 may store replicated virtual cartridges 121, which are replicated versions of the primary virtual cartridges 52. It is noted that the data center 100 may be in communication with the primary storage appliances 20 of the offices 10 via one or multiple types of network fabric (i.e., wide area network (WAN) connections, wireless connections, Internet connections, and so forth). Regardless of the network fabric or protocols used, a relatively low bandwidth connection 74 is used between the primary storage appliance 20 and the secondary storage appliance 110 for virtual cartridge replication operations, as further described below.

As depicted in Fig. 1, the primary storage appliance 20 includes a set of machine executable instructions that when executed by the hardware 80 form an instance of a virtual tape library engine 64, which, in general, communicates with the backup application 97 to allow the backup application 97 to interact with the virtual interface components (the virtual drive, the virtual robotics, the virtual mail slot, and so forth) and control the movement of the primary virtual cartridges 52, as further described below. The primary storage appliance 20 also includes a set of machine executable instructions that when executed by the hardware 80 form a tape attachment engine 66, which controls selection of the medium (virtual tape, physical tape, and so forth) for a replication operation and the form (deduplicated (deduped) data or not) of the data being communicated in the replication operation.

The tape attachment engine 66 may employ the use of a deduplication engine 68, an instance of which is generated due to execution of a set of machine executable instructions by the hardware 80 for purposes of handling deduplicated, or "deduped" data. Deduped data refers to data that has been compressed to represent the incremental differences between a primary virtual cartridge 52 and its associated replicated cartridge. For example, the physical tape drive 30 may store a replica of the primary virtual cartridges 52 (i.e., a physical tape cartridge that is a replica of a primary virtual cartridge). After the replicated physical cartridge is created, the primary virtual cartridge 52 changes over time due to updates. When a replication operation occurs to update the replicated physical cartridge to make the cartridges consistent (i.e., the same), the physical cartridge may be updated using deduped data, i.e., using only data indicative of the incremental differences, thereby saving time and bandwidth. Conversely, when a given primary virtual cartridge 52 is restored from a replica, the restoration may occur using deduped data that is retrieved from the corresponding replicated physical cartridge on the tape drive 30.

The primary storage appliance 20 further includes a set of machine executable instructions that when executed by the hardware 80 cause the hardware to form an instance of a replicator 70, which controls the replication of and retrieval of replicated virtual cartridges to and from the secondary storage appliance 110. In this regard, the replicator 70 may communicate with a corresponding replicator 104 of the storage appliance 110 for purposes of producing and updating corresponding replicated virtual cartridges 121 that are stored on the secondary storage appliance 110. Conversely, the replicators 70 and 104 may communicate to update a primary virtual cartridge 52 so that the primary virtual cartridge 52 is consistent with a replicated virtual cartridge that is stored on the secondary storage appliance 110. As described further below, a given replication operation between the storage appliances 20 and 110 may occur over the relatively low bandwidth connection 74, in that the operation involves the communication of deduped data, instead of the communication of all of the data from the source virtual cartridge.

In accordance with example implementations, the backup application 70 uses the virtual interface components of the virtual library 50 to initiate a replication operation and therefore, does not interact directly with replication controls (controls of the replicator 70, for example) of the primary storage appliance 20. In particular, moving primary virtual cartridge 52 into the mail slot 57 triggers a replication operation involving the virtual cartridge 52, in accordance with some implementations.

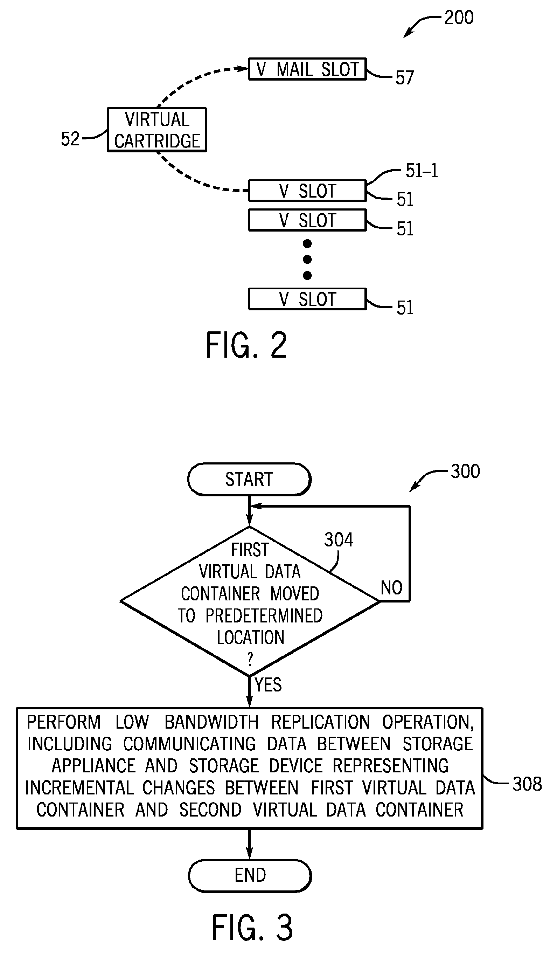

As a more specific example, Fig. 2 is an illustration 200 showing the backup application's movement of a given primary virtual cartridge 52 from a virtual slot 51-1 containing the primary virtual cartridge 52 to the virtual mail slot 57. As a non-limiting example, the movement may occur due to the backup application 97 issuing a SCSI MOVE MEDIUM command, which instructs the virtual tape library engine 64 to move the virtual cartridge 51-1 to the virtual mail slot 57. This movement, in turn, is used for purposes of triggering a low bandwidth replication operation (i.e., replication using deduped data) between the storage appliances 20 and 110, which involves using the virtual cartridge 51-1 as either a source or a target of the operation.

In this manner, it is noted that the low bandwidth replication operation may involve transferring data in either direction. In other words, the low bandwidth replication operation may involve restoring a given primary virtual cartridge (here, the target) from its corresponding replicated virtual cartridge or using the primary virtual cartridge (here, the source) to update a replicated virtual cartridge. Regardless of the direction, by using low bandwidth replication (i.e., by communicating deduped data), network bandwidth between the storage appliances 20 and 110 is conserved.

In some implementations, the virtual tape library 50 may have one or multiple virtual mail slots 57 that are designated as triggering different replication operations. For example, one virtual mail slot 57 may be associated with triggering a low bandwidth replication operation between the primary storage appliance 20 and the secondary storage appliance 110 to transfer data from the primary storage appliance 20 to the secondary storage appliance 110 to update a replicated virtual cartridge that is stored on the secondary storage appliance 110; another virtual mail slot 57 may be associated with triggering a low bandwidth replication operation between the primary storage appliance 20 and the secondary storage appliance 110 to transfer data from the secondary storage appliance 110 to the primary storage appliance 20 to restore the primary virtual cartridge in the virtual mail slot 57; another virtual mail slot 57 may be associated with triggering a replication (deduped or full data) operation between the primary storage appliance 20 and a physical tape drive (such as the physical tape drive 30) and the primary storage appliance 20 for purposes of data restoral or backup; and so forth. As another variation, the movement of a primary virtual cartridge 52 into a virtual mail slot 57 may cause the backup application 97 and/or a user of the backup application 97 to be prompted regarding inputs for such parameters as the type of desired replication (deduped replication, full replication, etc.), the source and target of the replication operation, and so forth. Thus, many variations are contemplated and are within the scope of the appended claims.

Therefore, referring to Fig. 3 in conjunction with Fig. 1, in accordance with some implementations, a technique 300 may be used to trigger and perform a low bandwidth replication operation. Pursuant to the technique 300, a determination is made (decision block 304) whether a first virtual data container (a virtual cartridge, for example) has moved to a predetermined location (a virtual mail slot, for example). If so, the technique 300 includes performing (block 308) a low bandwidth replication operation, which includes communicating data between a storage appliance (storing the first virtual data container) and a storage device (storing a second virtual data container) such that the data represents the incremental differences between the first and second virtual data containers.

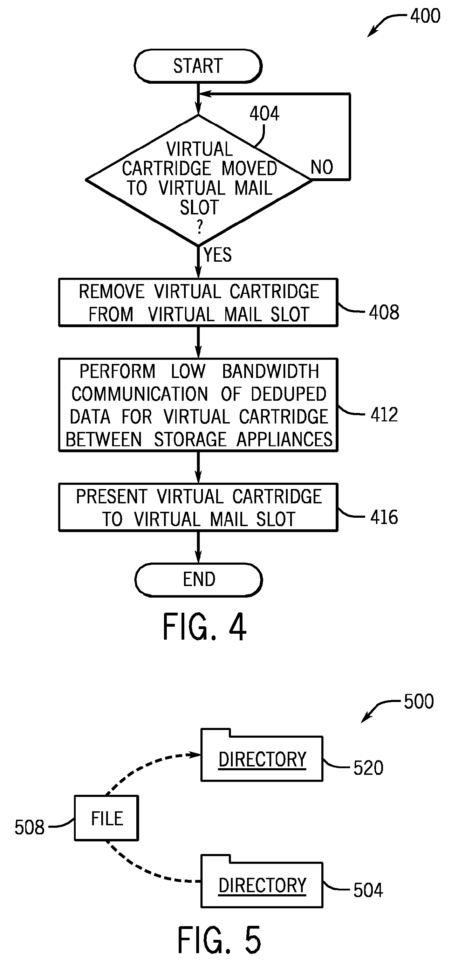

As a more specific example, Fig. 4 depicts a technique 400 that may be performed by the primary storage appliance 20 in accordance with example implementations. Referring to Fig. 4 in conjunction with Fig. 1, pursuant to the technique 400, the virtual tape engine 64 determines (decision block 404) whether a virtual cartridge has moved to a virtual mail slot. For this non-limiting example, the virtual mail slot is associated with triggering a low bandwidth replication between the primary storage appliance 20 and the secondary storage appliance 110 (in either direction, as predetermined).

One way for the virtual tape engine 64 to detect movement of a virtual cartridge to a virtual mail slot is by monitoring the SCSI commands that are generated by the server(s) 90. For example, the virtual tape library engine 64 may process the SCSI commands and for purposes of detecting movement into the virtual mail slot may specifically detect a SCSI MOVE MEDIUM command that is used to direct the primary storage appliance 20 to move a virtual cartridge from a virtual cartridge slot to a virtual mail slot. Continuing this example, in response to detecting the SCSI MOVE MEDIUM command that directs the primary storage appliance 20 to move a virtual cartridge from a virtual cartridge slot to a virtual mail slot, the virtual tape library engine 64 may generate a signal that causes the replicator 70 to proceed with a replication operation involving the primary virtual cartridge 52 in the virtual mail slot.

Regardless of how the move is detected, the virtual tape library engine 64 temporarily removes (block 408) the virtual cartridge from the virtual mail slot (i.e., renders the primary virtual cartridge 52 "invisible" to the server(s) 90) while the replication operation occurs so that the virtual cartridge cannot be moved or altered during the replication operation. The technique 400 includes performing (block 412) low bandwidth communication of deduped data for the primary virtual cartridge between the primary storage appliance 20 and then, subsequent to the replication operation, once again representing (block 416) the virtual cartridge to be in the virtual mail slot, which indicates to the server 90 that the replication operation has been completed.

In accordance with some implementations, the movement of a virtual data container other than a virtual cartridge may be used to trigger a replication operation involving that virtual data container. For example, in accordance with other implementations, the storage appliance used by the server(s) 90 may be a filed-based storage system that employs a file-based protocol, such as a Network Attached Storage (NAS) protocol (a Common Internet File System (CIFS) protocol or a Network File System (NFS) protocol, as non-limiting examples). For these implementations, the movement of a file (i.e., another virtual data container) to a predetermined location triggers a replication operation that involves the file.

Referring to Fig. 5, as a more specific example, a given server 90 may transfer a given file 506 from a first directory 504 to a second directory 520 that is associated with triggering a replication operation. This may be accomplished by a user of the server 90 using a mouse to drag a graphical representation of the file into the directory 504 or by the execution of machine executable instructions on the server 90. As a non-limiting example, the directory 520 may be a shared directory. Moreover, as a non-limiting example, the replication operation may involve a network data management protocol (NDMP) job to replicate the contents of the file 508. It is noted that the converse is also possible, such as the restoral from physical tape media via the NDMP job and the presentation of such a restored file within a file share once restored from the media.

Other implementations are contemplated and are within the scope of the appended claims. For example, in accordance with some implementations, the primary storage appliance 20, may initiate a replication operation without the aid of the backup application 97. In this manner, as a non-limiting example, the primary storage appliance 20 may detect movement of a given primary virtual cartridge 52 back to an originating cartridge slot 51 and trigger a replication operation in response thereto.

## Claims

1. A method (300) comprising:
detecting (304) movement of a first virtual data container (52) stored on a storage appliance (20) to a predetermined location; and
in response to the movement, performing (308) a replication operation comprising communicating data between the storage appliance (20) and a storage device (110) other than the storage appliance (20), wherein the data identifies incremental differences between the first virtual data container (52) and a second virtual data container (121) stored on the storage device (110).

2. The method of claim 1, wherein
the first virtual data container (52) comprises a virtual cartridge,
the storage appliance (20) comprises a virtual storage appliance comprising a virtual library (50), and
the act of detecting (304) the movement of the first virtual data container (52) comprises detecting (404) a command to move the first virtual data container (52) to a mail slot (57) of the virtual library (50).

3. The method of claim 1, wherein
the first virtual data container (52) comprises a file (508), and
the act of detecting (304) the movement of the first virtual data container (52) comprises detecting movement of the file into a predetermined directory (520).

4. The method of claim 1, wherein the act of communicating the data comprises transferring data from the storage appliance (20) to the storage device (110) to update the second virtual data container (121) so that the second virtual data container (121) is consistent with the first virtual data container (52).

5. The method of claim 1, wherein the act of communicating the data comprises transferring data from the storage device (110) to the storage appliance (20) to update the first virtual data container (52) so that the first virtual data container (52) is consistent with the second virtual data container (121).

6. The method of claim 1, wherein the storage device (110) comprises another storage appliance.

7. The method of claim 1, further comprising:
during the replication operation, causing (408) an interface to indicate that the first virtual data container (52) is not at the location; and
in response to a conclusion of the replication operation, causing (416) the interface to indicate that the first virtual data container (52) is at the location.

8. A computer program comprising computer program code means for performing all of the steps of any of claims 1 to 7 when said program is run on a computer.

9. A system (5) comprising:
an engine to detect movement of a first virtual data container (52) stored on a storage appliance (20) to a predetermined location;
and
a replicator (70) comprising a processor (84) to, in response to the movement, perform a replication operation, wherein the replicator performs the replication (70) operation by at least communicating data between the storage appliance (20) and a storage device (110) other than the storage appliance (20), and the data identifies incremental differences between the first virtual data container (52) and a second virtual data container (121) stored on the storage device (110).

10. The system of claim 9, wherein
the engine is adapted to detect a command to move the first virtual data container (52) and generate a signal in response to detection of the command, and
the replicator (70) is adapted to begin the replication operation in response to the signal.

11. The system of claim 10, wherein the command comprises a Small Computer System Interface (SCSI) move medium command.

12. The system of claim 9, wherein the engine is adapted to:
provide an indication regarding a data content associated with the location;
in response to the replication operation, provide an indication that the first virtual data container (52) is not at the location; and
in response to a conclusion of the replication operation, provide an indication that the first virtual data container (52) is at the location.

13. The system of claim 9, wherein the replicator is adapted to transfer the data from the storage appliance (20) to the storage device (110) to update the second virtual data container (121) so that the second virtual data container (121) is consistent with the first virtual data container (52).

14. The system of claim 9, wherein the replicator (70) is adapted to transfer the data from the storage device (110) to the storage appliance (20) to update the first virtual data container (52) so that the first virtual data container (52) is consistent with the second virtual data container (121).

15. The system of claim 9, wherein the storage device (110) comprises another storage appliance.

## Patentansprüche

1. Verfahren (300), Folgendes umfassend:
Erfassen (304) von Bewegung eines ersten virtuellen Datencontainers (52), gespeichert auf einem Speichergerät (20), zu einem vorgegebenen Standort; und
Durchführen (308), als Reaktion auf die Bewegung, eines Replikationsvorgangs, umfassend ein Kommunizieren von Daten zwischen dem Speichergerät (20) und einer von dem Speichergerät (20) verschiedenen Speichervorrichtung (110), wobei die Daten inkrementelle Unterschiede zwischen dem ersten virtuellen Datencontainer (52) und einem zweiten virtuellen Datencontainer (121), gespeichert auf der Speichervorrichtung (110), identifizieren.

2. Verfahren nach Anspruch 1, wobei
der erste virtuelle Datencontainer (52) eine virtuelle Kartusche umfasst,
das Speichergerät (20) ein virtuelles Speichergerät, umfassend eine virtuelle Bibliothek (50), umfasst und
der Vorgang des Erfassens (304) der Bewegung des ersten virtuellen Datencontainers (52) ein Erfassen (404) eines Befehls, den ersten virtuellen Datencontainer (52) zu einem Briefschlitz (57) der virtuellen Bibliothek (50) zu bewegen, umfasst.

3. Verfahren nach Anspruch 1, wobei
der erste virtuelle Datencontainer (52) eine Datei (508) umfasst, und
der Vorgang des Erfassens (304) der Bewegung des ersten virtuellen Datencontainers (52) ein Erfassen von Bewegung der Datei in ein vorgegebenes Verzeichnis (520) umfasst.

4. Verfahren nach Anspruch 1, wobei der Vorgang des Kommunizierens der Daten ein Übertragen von Daten von dem Speichergerät (20) zu der Speichervorrichtung (110) umfasst, um den zweiten virtuellen Datencontainer (121) zu aktualisieren, sodass der zweite virtuelle Datencontainer (121) mit dem ersten virtuellen Datencontainer (52) übereinstimmt

5. Verfahren nach Anspruch 1, wobei der Vorgang des Kommunizierens der Daten ein Übertragen von Daten von der Speichervorrichtung (110) zu dem Speichergerät (20) umfasst, um den ersten virtuellen Datencontainer (52) zu aktualisieren, sodass der erste virtuelle Datencontainer (52) mit dem zweiten virtuellen Datencontainer (121) übereinstimmt.

6. Verfahren nach Anspruch 1, wobei die Speichervorrichtung (110) ein weiteres Speichergerät umfasst.

7. Verfahren nach Anspruch 1, ferner Folgendes umfassend:
Bewirken (408), während des Replikationsvorgangs, dass eine Schnittstelle anzeigt, dass der erste virtuelle Datencontainer (52) nicht an dem Standort ist; und
Bewirken (416), als Reaktion auf einen Abschluss des Replikationsvorgangs, dass die Schnittstelle anzeigt, dass der erste virtuelle Datencontainer (52) an dem Standort ist.

8. Computerprogramm, umfassend Computerprogrammcodemittel zum Durchführen aller Schritte nach einem der Ansprüche 1 bis 7, wenn das Programm auf einem Computer ausgeführt wird.

9. System (5), Folgendes umfassend:
eine Maschine zum Erfassen von Bewegung eines ersten virtuellen Datencontainers (52), gespeichert auf einem Speichergerät (20), zu einem vorgegebenen Standort;
und
einen Replikator (70), umfassend einen Prozessor (84), um als Reaktion auf die Bewegung einen Replikationsvorgang durchzuführen, wobei der Replikator den Replikations(70)-Vorgang durch wenigstens Kommunizieren von Daten zwischen dem Speichergerät (20) und einer von dem Speichergerät (20) verschiedenen Speichervorrichtung (110) durchführt und die Daten inkrementelle Unterschiede zwischen dem ersten virtuellen Datencontainer (52) und einem zweiten virtuellen Datencontainer (121), gespeichert auf der Speichervorrichtung (110), identifizieren.

10. System nach Anspruch 9, wobei
die Maschine angepasst ist, einen Befehl zum Bewegen des ersten virtuellen Datencontainers (52) zu erfassen und als Reaktion auf das Erfassen des Befehls ein Signal zu erzeugen, und
der Replikator (70) angepasst ist, den Replikationsvorgang als Reaktion auf das Signal zu starten.

11. System nach Anspruch 10, wobei der Befehl einen Move-Medium-Befehl der Small Computer System Interface (SCSI) umfasst.

12. System nach Anspruch 9, wobei die Maschine angepasst ist zum:
Bereitstellen eines Hinweises in Bezug auf einen mit dem Standort verknüpften Dateninhalt;
Bereitstellen, als Reaktion auf den Replikationsvorgang, eines Hinweises, dass der erste virtuelle Datencontainer (52) nicht an dem Standort ist; und
Bereitstellen, als Reaktion auf einen Abschluss des Replikationsvorgangs, eines Hinweises, dass der erste virtuelle Datencontainer (52) an dem Standort ist.

13. System nach Anspruch 9, wobei der Replikator angepasst ist, die Daten von dem Speichergerät (20) zu der Speichervorrichtung (110) zu übertragen, um den zweiten virtuellen Datencontainer (121) zu aktualisieren, sodass der zweite virtuelle Datencontainer (121) mit dem ersten virtuellen Datencontainer (52) übereinstimmt.

14. System nach Anspruch 9, wobei der Replikator (70) angepasst ist, die Daten von der Speichervorrichtung (110) zu dem Speichergerät (20) zu übertragen, um den ersten virtuellen Datencontainer (52) zu aktualisieren, sodass der erste virtuelle Datencontainer (52) mit dem zweiten virtuellen Datencontainer (121) übereinstimmt.

15. System nach Anspruch 9, wobei die Speichervorrichtung (110) ein weiteres Speichergerät umfasst.

## Revendications

1. Procédé (300) comprenant :
la détection (304) d'un déplacement d'un premier conteneur de données virtuel (52) stocké sur une application de stockage (20) vers un emplacement prédéterminé ; et
en réponse au déplacement, l'exécution (308) d'une opération de réplication comprenant la communication de données entre l'application de stockage (20) et un dispositif de stockage (110) différent de l'application de stockage (20), les données identifiant des différences incrémentales entre le premier conteneur de données virtuel (52) et un deuxième conteneur de données virtuel (121) stocké sur le dispositif de stockage (110).

2. Procédé selon la revendication 1, dans lequel
le premier conteneur de données virtuel (52) comprend une cartouche virtuelle,
l'application de stockage (20) comprend une application de stockage virtuelle comprenant une librairie virtuelle (50), et
l'action de détection (304) du déplacement du premier conteneur de données virtuel (52) comprend la détection (404) d'une commande destinée à déplacer le premier conteneur de données virtuel (52) vers une boîte aux lettres (57) de la librairie virtuelle (50).

3. Procédé selon la revendication 1, dans lequel
le premier conteneur de données virtuel (52) comprend un fichier (508), et
l'action de détection (304) du déplacement du premier conteneur de données virtuel (52) comprend la détection d'un mouvement du fichier vers un répertoire prédéterminé (520).

4. Procédé selon la revendication 1, dans lequel l'action de communication des données comprend le transfert des données de l'application de stockage (20) vers le dispositif de stockage (110) pour mettre à jour le deuxième conteneur de données virtuel (121) de manière à ce que le deuxième conteneur de données virtuel (121) soit compatible avec le premier conteneur de données virtuel (52).

5. Procédé selon la revendication 1, dans lequel l'action de communication des données comprend le transfert des données du dispositif de stockage (110) vers l'application de stockage (20) pour mettre à jour le premier conteneur de données virtuel (52) de manière à ce que le premier conteneur de données virtuel (52) soit compatible avec le deuxième conteneur de données virtuel (121).

6. Procédé selon la revendication 1, dans lequel le dispositif de stockage (110) comprend une autre application de stockage.

7. Procédé selon la revendication 1, comprenant en outre :
pendant l'opération de réplication, l'incitation (408) d'une interface à indiquer que le premier conteneur de données virtuel (52) ne se trouve pas à l'emplacement ; et
en réponse à une conclusion de l'opération de réplication, l'incitation (416) de l'interface à indiquer que le premier conteneur de données virtuel (52) se trouve à l'emplacement.

8. Programme informatique comprenant un moyen de code de programme informatique destiné à mettre en oeuvre toutes les étapes de l'une quelconque des revendications 1 à 7 lorsque ledit programme est exécuté sur un ordinateur.

9. Système (5) comprenant :
un moteur permettant de détecter un déplacement d'un premier conteneur de données virtuel (52) stocké sur une application de stockage (20) vers un emplacement prédéterminé ; et
un réplicateur (70) comprenant un processeur (84) pour exécuter, en réponse au déplacement, une opération de réplication, le réplicateur exécutant l'opération de réplication (70) au moins par la communication de données entre l'application de stockage (20) et le dispositif de stockage (110) différent de l'application de stockage (20), et les données identifiant des différences incrémentales entre le premier conteneur de données virtuel (52) et le deuxième conteneur de données virtuel (121) stocké sur le dispositif de stockage (110).

10. Système selon la revendication 9, dans lequel
le moteur est adapté pour détecter une commande destinée à déplacer le premier conteneur de données virtuel (52) et à générer un signal en réponse à la détection de la commande, et
le réplicateur (70) est adapté pour démarrer l'opération de réplication en réponse au signal.

11. Système selon la revendication 10, dans lequel la commande comprend une commande Move Medium d'Interface de petits systèmes informatiques (SCSI).

12. Système selon la revendication 9, dans lequel le moteur est adapté pour :
fournir une indication concernant un contenu de données associé à l'emplacement ;
en réponse à l'opération de réplication, indiquer que le premier conteneur de données virtuel (52) ne se trouve pas à l'emplacement ; et
en réponse à une conclusion de l'opération de réplication, indiquer que le premier conteneur de données virtuel (52) se trouve à l'emplacement.

13. Système selon la revendication 9, dans lequel le réplicateur est adapté pour transférer les données de l'application de stockage (20) au dispositif de stockage (110) pour mettre à jour le deuxième conteneur de données virtuel (121) de manière à ce que le deuxième conteneur de données virtuel (121) soit compatible avec le premier conteneur de données virtuel (52).

14. Système selon la revendication 9, dans lequel le réplicateur (70) est adapté pour transférer les données du dispositif de stockage (110) à l'application de stockage (20) pour mettre à jour le premier conteneur de données virtuel (52) de manière à ce que le premier conteneur de données virtuel (52) soit compatible avec le deuxième conteneur de données virtuel (121).

15. Système selon la revendication 9, dans lequel le dispositif de stockage (110) comprend une autre application de stockage.
